# EUROPEAN PATENT APPLICATION

(11) **EP 2 840 286 A1**
(43) Date of publication of application: **25.02.2015**
(21) Application number: 13778927.7
(22) Date of filing: 18.04.2013
(51) Int. Cl.: F16K 31/06, H01M 8/04

(54) **STRUCTURE FOR FIXING DIAPHRAGM TO DRIVE SHAFT AND METHOD FOR FIXING DIAPHRAGM TO DRIVE SHAFT**

(30) Priority: 19.04.2012 JP 2012095507
(71) Applicant: Kabushiki Kaisha Saginomiya Seisakusho, Tokyo 165-8907 (JP)
(72) Inventor: OSAWA, Kazuhiko, Sayama-shi Saitama 350-1395 (JP); OKAWARA, Ichiro, Sayama-shi Saitama 350-1395 (JP); ISHIGURO, Motoyasu, Sayama-shi Saitama 350-1395 (JP); SATO, Yuichi, Sayama-shi Saitama 350-1395 (JP)
(74) Representative: Petraz, Gilberto Luigi
(86) International application number: PCT/JP2013/061479
(87) International publication number: WO 2013/157601

(57) **Abstract**

In an electromagnetic control valve (10) configured to cancel out forces acting on a valve body (21) by differential pressure using a diaphragm (3), pressure tightness and durability of the diaphragm (3) are improved. A needle-shaped projection (231) is formed on a lower end of a piston section (23) of a valve rod (2) that is a drive shaft. An insertion hole (17c1) isformed in the center of a diaphragm guide (17c). The center of the diaphragm (3) is stuck on the needle-shaped projection (231) to make it pass through it. The needle-shaped projection (231) is inserted into the insertion hole (17c1) in the diaphragm guide (17c). An end of the needle-shaped projection (231) is spot-welded. The diaphragm (3) is stuck with the needle-shaped projection (231) to fix it to the valve rod (2) without cutting a base fabric (3A) of the diagram (3). A needle-shaped projection (17c2) may be formed on the diaphragm guide (17c) and an insertion hole (232) may be formed in the valve rod (2) so as to press-fit the needle-shaped projection (17c2) into the insertion hole (232).

## Description

### TECHNICAL FIELD

The present invention relates to a structure for fixing and a method for fixing diaphragm to drive shaft for fixing a flexible diaphragm with a base fabric embedded therein to an end of a drive shaft.

### BACKGROUND ART

Conventionally, as an electromagnetic control valve, there exists the one configured to cancel out forces that a differential pressure between a primary chamber and a secondary chamber acts on a valve body of a valve rod by making a differential pressure between a mean pressure chamber communicated with a high-pressure side primary chamber and a low pressure chamber communicated with a low-pressure secondary chamber act on the valve rod via a diaphragm. It is disclosed, for example, in Japanese Patent Laid-Open No. 2011-169415 (Patent Document 1). This electromagnetic control valve is of the type that the valve rod having the valve body is disposed in a valve housing and the valve rod is axially displaced by an electromagnetic force generated by electric conduction to an electromagnetic coil, thereby controlling the opening of a valve port by the above-mentioned valve body.

In addition, in this electromagnetic control valve, the primary chamber that communicates with an inlet port and accommodates the valve body is provided on one side of the valve port and the secondary chamber that communicates with an outlet port is provided on the other side of the valve port. Further, the mean pressure chamber that communicates with the primary chamber via a mean pressure passage is provided on the secondary chamber side to configure so as to act the pressure of the mean pressure chamber on the valve rod via the diaphragm, thereby cancelling the forces acting on the valve body due to the differential pressure between the primary chamber side pressure and the secondary chamber side pressure.

Thereby, in this electromagnetic control valve of the pressure balance system, it becomes possible to perform stable flow rate control that a fixed valve opening is maintained at constant current without being affected by the differential pressure between the primary chamber side pressure and the secondary chamber side pressure.

### CONVENTIONAL DOCUMENT

### PATENT DOCUMENT

- Patent Document 1:: Japanese Patent Laid-Open No. 2011-169415 A

### DISCLOSURE OF THE INVENTION

### PROBLEMS TO BE SOLVED BY THE INVENTION

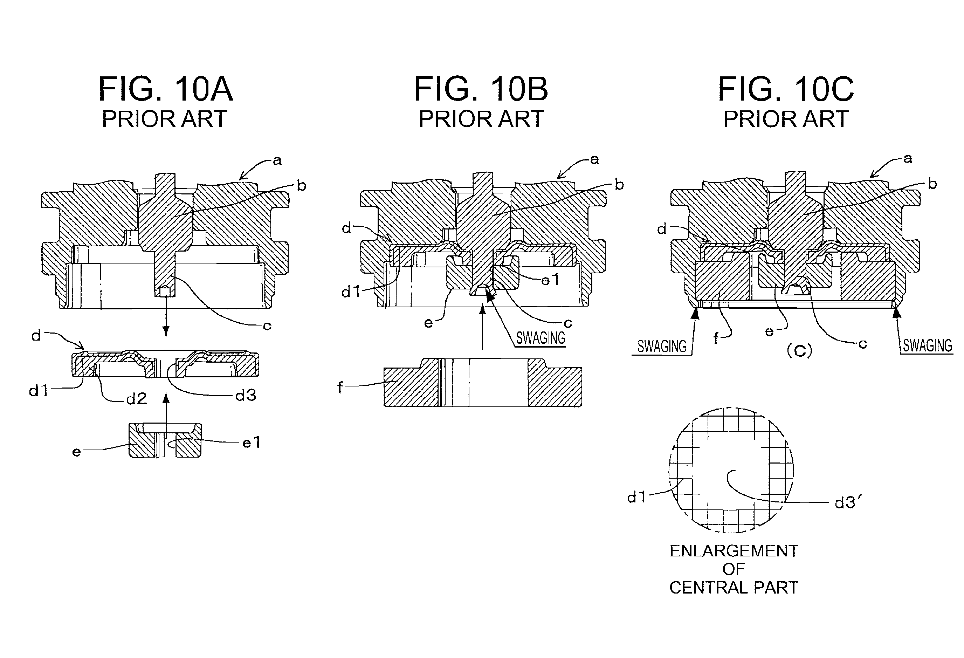

However, in the above-mentioned electromagnetic control valve, a through-hole is formed in the center of the diaphragm in order to fix the diaphragm to the end of the valve rod (the drive shaft). Fig. 10 is a central part schematic enlarged diagram of an essential part of the above-mentioned conventional electromagnetic control valve, an assembling process thereof and the diaphragm. As shown in Fig. 10(A), a coupling rod c whose leading end is made tubular is formed on an end of a piston section b in a valve housing a. A diaphragm d is of the type that a base fabric d1 has been embedded in a rubber layer d2 and a through hole d3 is formed in the center. Conventionally, the through hole d3 in the center of the diaphragm d is made to pass through the coupling rod c of the piston section b, a diaphragm guide e is inserted into the coupling rod c and a lower end of the coupling rod c is swaged to fix the diaphragm d to the piston section b as shown in Fig. 10(B). Then, a diaphragm presser f is fitted into a lower end part of the valve housing a and a lower end of the valve housing a is swaged as shown in Fig. 10(C).

In such a conventional assembling method, there existed such problems as follows. Since the through hole d3 is made in the center of the diaphragm d in order to fix it to the piston section b, as a result, a through hole d3' is also made in the base fabric d1 in the diaphragm d and the base fabric d1 (fibers thereof) falls into a cut state. In general, in a rubber diaphragm or the like, air-tightness is afforded by the rubber layer d2 and pressure tightness is afforded by the base fabric d1. That is, since the compressive strength of the diaphragm d depends on the strength of the base fabric d1, when it is used under a high pressure in a state that the base fabric d1 is left in the cut state, the rubber layer d2 stretches by being pressurized and also the base fabric d1 is pulled, when the base fabric d1 slips out of the rubber layer d2 on a part that has been cut with the through hole d3, the pressure tightness of the diaphragm d is remarkably reduced, and when the diaphragm d is damaged, it becomes impossible to cancel out the forces acting on the valve body due to the differential pressure between the primary chamber side pressure and the secondary chamber side pressure.

The present invention has been made in order to solve the problems as mentioned above and sets it as a subject to improve the pressure tightness and the durability of the diaphragm in the electromagnetic control valve that the structure for fixing the diaphragm to the drive shaft is improved so as to cancel out the forces acting on the valve body due to the differential pressure, for example, by using the diaphragm.

### MEANS FOR SOLVING THE PROBLEMS

A structure for fixing diaphragm to drive shaft of an aspect is the structure for fixing diaphragm to drive shaft for fixing a flexible diaphragm with base fabric embedded therein to a drive shaft, including a diaphragm guide that nips and holds the aforementioned diaphragm together with the aforementioned drive shaft, wherein a needle-shaped projection is formed on one of the aforementioned drive shaft and the aforementioned diaphragm guide, an insertion hole into which the needle-shaped projection is to be inserted is formed in the other, the center of the aforementioned diaphragm is stuck on the aforementioned needle-shaped projection so as to make the needle-shaped projection pass through the diaphragm, and the needle-shaped projection and the aforementioned insertion hole are firmly fixed together to fix the aforementioned diaphragm to the aforementioned drive shaft.

Preferably, a structure for fixing diaphragm to drive shaft is the structure for fixing diaphragm to drive shaft, wherein the aforementioned needle-shaped projection is formed on the aforementioned drive shaft, the aforementioned insertion hole is formed in the aforementioned diaphragm, the aforementioned needle-shaped projection is inserted into the aforementioned insertion hole and a leading end of the aforementioned needle-shaped projection is welded so as to firmly fix together the aforementioned needle-shaped projection and the aforementioned insertion hole.

Preferably, a structure for fixing diaphragm to drive shaft is the structure for fixing diaphragm to drive shaft, wherein the aforementioned needle-shaped projection is formed on the aforementioned diaphragm guide, the aforementioned insertion hole is formed in the aforementioned drive shaft, and the aforementioned needle-shaped projection and the insertion hole are firmly fixed together by press-fitting the aforementioned needle-shaped projection into the aforementioned insertion hole.

A method for fixing diaphragm to drive shaft of another aspect is a method for fixing diaphragm to drive shaft for fixing a flexible diaphragm with base fabric embedded therein to a drive shaft, includes the steps of using a diaphragm guide that nips and holds the aforementioned diaphragm together with the aforementioned drive shaft, forming a needle-shaped projection on one of the aforementioned drive shaft and the aforementioned diaphragm guide and forming an insertion hole into which the needle-shaped projection is to be inserted in the other and sticking the center of the aforementioned diaphragm on the aforementioned needle-shaped projection to make the needle-shaped projection pass through the diaphragm, and firmly fixing together the needle-shaped projection and the aforementioned insertion hole so as to fix the aforementioned diaphragm to the aforementioned drive shaft.

Preferably, a method for fixing diaphragm to drive shaft is the method for fixing diaphragm to drive shaft, wherein the aforementioned needle-shaped projection is formed on the aforementioned drive shaft, a needle-shaped cap on a leading end part of the needle-shaped projection is made removable, the aforementioned insertion hole is formed in the aforementioned diaphragm guide, and the center of the diaphragm is stuck on the aforementioned needle-shaped cap of the aforementioned needle-shaped projection so as to make the needle-shaped projection pass through the diaphragm.

Preferably, a method for fixing diaphragm to drive shaft is the method for fixing diaphragm to drive shaft, wherein after the aforementioned needle-shaped projection has been made to path through the aforementioned diaphragm, the aforementioned needle-shaped cap of the aforementioned needle-shaped projection is inserted into the insertion hole in the aforementioned diaphragm guide, the needle-shaped cap is removed, and a leading end of the aforementioned needle-shaped projection from which the needle-shaped cap has been removed is swaged or welded so as to firmly fix together the needle-shaped projection and the aforementioned insertion hole.

### ADVANTAGES OF THE INVENTION

According to the structure for fixing diaphragm to drive shaft, even when the diaphragm is stuck on the needle-shaped projection, the needle-shaped projection simply passes through a gap between fibers of the base fabric, a hole such as a through hole is not formed in the base fabric and the base fabric (the fibers thereof) is not cut. Accordingly, the pressure tightness and the durability of the diaphragm can be improved.

According to the structure for fixing diaphragm to drive shaft, the needle-shaped projection and the diaphragm guide can be firmly fixed together strongly by welding in addition to the aforementioned effect.

According to the structure for fixing diaphragm to drive shaft, since the diaphragm guide needs only to be press-fitted to the drive shaft side, assembling work is facilitated in addition to the aforementioned effect. In addition, the diaphragm fixing structure can be made strong by making the needle-shaped projection of the diaphragm guide thick.

According to the method for fixing diaphragm to drive shaft, the same effect as that aforementioned can be obtained.

According to the method for fixing diagram to drive shaft, the same effect as that aforementioned can be obtained and the diaphragm fixing structure can be made strong by making the needle-shaped projection thick.

According to the method for fixing diaphragm to drive shaft, since the needle-shaped cap is present when the diaphragm guide is to be inserted into the needle-shaped projection, an effect that the diaphragm guide is readily inserted can be obtained in addition to the aforementioned effect. In addition, since swaging or welding is performed by removing the needle-shaped cap, swaging and welding can be readily performed while making the diaphragm fixing structure strong by making the needle-shaped projection thick.

### BRIEF DESCRIPTION OF THE DRAWINGS

Fig. 1 is a longitudinal sectional diagram of a valve closed state of an electromagnetic control valve of a first embodiment to which the present invention has been applied;
Fig. 2A is a sectional diagram and a schematic plan view before a diaphragm is fixed in an embodiment to which the present invention has been applied;
Fig. 2B is a sectional diagram and a schematic plan view before a diaphragm is fixed in an embodiment to which the present invention has been applied;
Fig. 3A is diagrams explaining a state of passing a needle-shaped projection through the diaphragm in the embodiment to which the present invention has been applied;
Fig. 3B is diagrams explaining a state of passing a needle-shaped projection through the diaphragm in the embodiment to which the present invention has been applied;
Fig. 4A is diagrams explaining an assembling process of an essential part of the electromagnetic control valve of the first embodiment to which the present invention has been applied;
Fig. 4B is diagrams explaining an assembling process of an essential part of the electromagnetic control valve of the first embodiment to which the present invention has been applied;
Fig. 4C is diagrams explaining an assembling process of an essential part of the electromagnetic control valve of the first embodiment to which the present invention has been applied;
Fig. 5 is a longitudinal sectional diagram of a valve closed state of an electromagnetic control valve of a second embodiment to which the present invention has been applied;
Fig. 6 is a longitudinal sectional diagram of a valve closed state of an electromagnetic control valve of a third embodiment to which the present invention has been applied;
Fig. 7A is a sectional diagram and a schematic plan view before a diaphragm is fixed in the third embodiment to which the present invention has been applied;
Fig. 7B is a sectional diagram and a schematic plan view before a diaphragm is fixed in the third embodiment to which the present invention has been applied;
Fig. 8A is diagrams explaining an assembling process of an essential part of the electromagnetic control valve of the third embodiment to which the present invention has been applied;
Fig. 8B is diagrams explaining an assembling process of an essential part of the electromagnetic control valve of the third embodiment to which the present invention has been applied;
Fig. 8C is diagrams explaining an assembling process of an essential part of the electromagnetic control valve of the third embodiment to which the present invention has been applied;
Fig. 9 is a longitudinal sectional diagram of a valve closed state of an electromagnetic control valve of a fourth embodiment to which the present invention has been applied;
Fig. 10A is a central part schematic enlarged diagram of an essential part of a conventional electromagnetic control valve, an assembling process thereof and a diaphragm thereof;
Fig. 10B is a central part schematic enlarged diagram of an essential part of a conventional electromagnetic control valve, an assembling process thereof and a diaphragm thereof; and
Fig. 10C is a central part schematic enlarged diagram of an essential part of a conventional electromagnetic control valve, an assembling process thereof and a diaphragm thereof.

### MODE FOR CARRYING OUT THE INVENTION

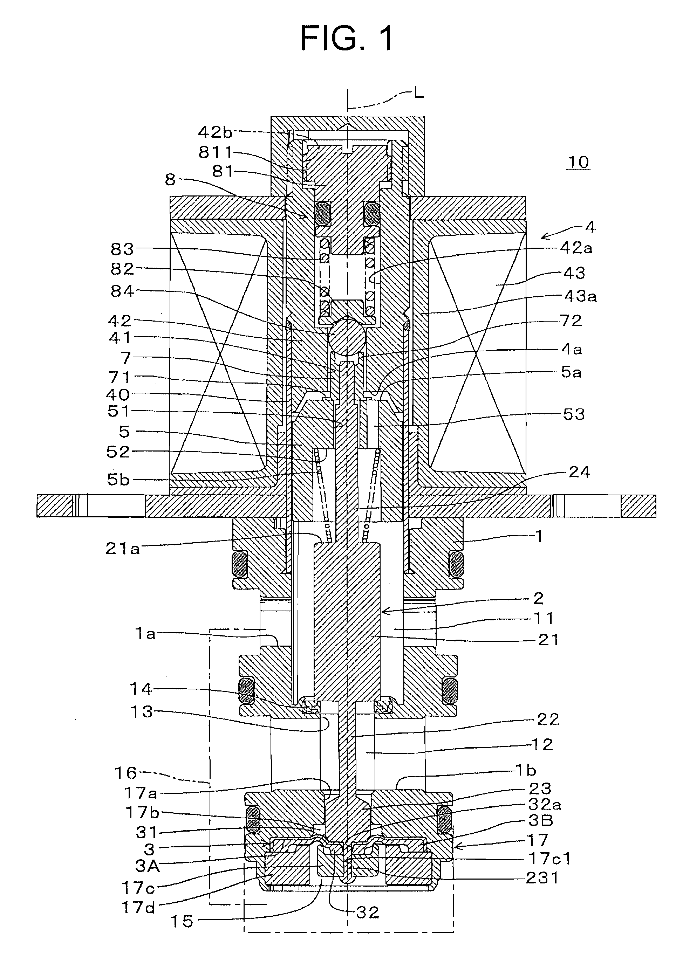

Next, embodiments of the present invention will be described. Fig. 1 is a longitudinal sectional diagram of a valve closed state of an electromagnetic control valve of a first embodiment to which the present invention has been applied. Although an electromagnetic control valve 10 of this embodiment is provided in pining of a fuel cell system, a fluid that flows through the piping of this fuel cell system is high in pressure and drastic in pressure fluctuation. The electromagnetic control valve 10 of this embodiment has a valve housing 1. The valve housing 1 has a high-pressure side inlet port 1a through which the fluid flows in, a low-pressure side outlet port 1b through which the fluid flows out, a primary chamber 11 that communicates with the inlet port 1a, a secondary chamber 12 that communicates with the outlet port 1b and a valve port 13 that communicates the primary chamber 11 with the secondary chamber 12. The valve port 13 is circular in a horizontal sectional shape and a ring-shaped valve seat member 14 is disposed in its primary chamber 11 side opening.

A valve rod 2 as a "drive shaft" that is displaceable in a direction along an axial line L extends in the primary chamber 11, the secondary chamber 12 and the valve port 13. The valve rod 2 has a columnar valve body 21 that is located in the primary chamber 11 and is made touchable and releasable relative to the valve seat member 14, a coupling rod 22 disposed to extend downward of the valve body 21, a piston section 23 coupled to the valve body 21 by the coupling rod 22 and a coupling rod 24 disposed to extend upward of the valve body 21. Incidentally, the valve seat member 14 may be eliminated so as to let only the primary chamber side opening in the valve port 13 remain as it is and a seal member that is equal to the valve seat member 14 may be provided around a lower end of the valve body 21.

The valve body 21 sets the opening of the valve port 13 from a positional relationship with the valve seat member 14 determined by displacement in the direction along the axial line L of the valve rod 2. The pressure of the primary chamber 11 is higher than the pressure of the secondary chamber 12, the differential pressure between the pressure of this primary chamber 11 and the pressure of the secondary chamber 12 acts on the valve body 21 and the valve body 21 receives the force in a valve closing direction. The force that this differential pressure acts on the valve body 21 is determined by an inner diameter (an effective pressure receiving diameter of the valve body 21) of the valve port 13.

A mean pressure chamber 15 is formed on a lower end of the valve housing 1 and this mean pressure chamber 15 is communicated with the primary chamber 11 through the inlet port 1a via a mean pressure guide path 16 formed in a not shown housing. A pressure balance part 17 is configured in the mean pressure chamber 15. This pressure balance part 17 has a communication hole 17a formed in the valve housing 1, a low pressure chamber 17b communicated with the secondary chamber 12 through the communication hole 17a and a rubber diaphragm 3 that is disposed by fitting into a space between the low pressure chamber 17b and the mean pressure chamber 15 side and a base fabric 3A of which is embedded in a rubber layer 3B. Incidentally, the diaphragm 3 has a convolution part 31 and this convolution part 31 is a rotor rotating around the axial line L and is swelled into the low pressure chamber 17b on the outer periphery of the piston section 23. In addition, the diaphragm 3 has a columnar boss part 32 and a concave part 32a into which a later described needle-shaped projection 231 is to be buried is formed in the center of this boss part 32.

The piston section 23 of the valve rod 2 is inserted into the communication hole 17a not in contact with the communication hole 17a. The needle-shaped projection 231 is formed on a lower end of the piston section 23. In addition, an insertion hole 17c1 into which the needle-shaped projection 231 is to be inserted is formed in a diaphragm guide 17c that nips and holds the diaphragm 3 together with the piston section 23. Then, the needle-shaped projection 231 of the piston section 23 passes through the center of the concave part 32a in the diaphragm 3 and the diaphragm guide 17c is fitted on this needle-shaped projection 231 through the insertion hole 17c1. Then, the boss part 32 of the diaphragm 3 is nipped by the diaphragm guide 17c and the piston section 23 and the diaphragm 3 is firmly fixed to the piston section 23 by spot-welding a leading end of the needle-shaped projection 231. In addition, the diaphragm presser 17d is fitted into the lower end part of the valve housing 1 and the diaphragm presser 17d and the diaphragm 3 are fixed together by swaging the lower end of the valve housing 1. The diaphragm 3 has flexibility and transmits the force that has been generated by the differential pressure between the primary chamber pressure and the secondary chamber pressure and acts on the mean pressure chamber 15 to the valve rod 2.

An electromagnetic drive part 4 is provided on (the primary chamber 11 side) the valve housing 1. The electromagnetic drive part 4 is provided with a cylindrical plunger tube 40, an attracter 42 that is made of a magnetic material fixed to an upper end of the plunger tube 40 and an electromagnetic coil 43 that is arranged on the outer periphery of the plunger tube 40 and a winding of which is wound on a bobbin 43a. Incidentally, the plunger tube 40 and the attracter 42 are fixed together by welding and so forth. The plunger 5 is disposed in the plunger tube 40 and a plunger spring 5b is disposed between the plunger 5 and the valve body 21. Incidentally, the plunger 5 is made of a magnetic material and others of the plunger 5 except an air vent 53 are shaped to be rotationally symmetric respectively centering on the axial line L. Insertion holes 41, 51 that are coaxial with the axial line L are respectively formed in the attracter 42 and the plunger 5. Then, the coupling rod 24 of the valve rod 2 is inserted into the insertion hole 51 in the plunger 5 and a tubular retaining member 7 that is made of a non-magnetic material is fitted on an end of the coupling rod 24 in the insertion hole 41 in the attracter 42. This retaining member 7 and the end of the coupling rod 24 are firmly fixed together by welding. The retaining member 7 has a flange-like part 71 on an end on the plunger 5 side and this flange-like part 71 is located between this counter-face surface 5a and a counter-face surface 4a of the attractor 42 on the plunger 5 side in a state that it is in contact with the counter-face surface 5a of the plunger 5 on the attracter 42 side.

The plunger spring 5b is disposed in a compressed state that one end is brought into abutment on an inner-side bottom face 52 of the plunger 5 and the other end is brought into abutment on a spring bearing part 21a that is an end face of the valve body 21 on the plunger 5 side. Thereby, the plunger 5 is brought to a state that the counter-face surface 5a always abuts on the retaining member 7 (the flange-like part 71 thereof) and when this plunger 5 is attracted in a direction of the attracter 42, the valve rod 2 displaces in a valve opening direction together with this plunger 5. A clearance between the insertion hole 51 in the plunger 5 and the coupling rod 24 of the valve rod 2 is set larger than a clearance between the plunger 5 and the plunger tube 40, and even when the plunger 5 displaces in a direction orthogonal to the axial line L, the valve rod 2 and the plunger 5 do not come into contact with each other.

A hole for adjustment part 42a that is larger in diameter than the insertion hole 41 is formed in the attracter 42 and a setting adjustment part 8 is disposed in this hole for adjustment part 42a. This setting adjustment part 8 has an adjusting screw 81, a spring bearing 82, an adjusting spring 83 and a ball 84. The adjusting spring 83 is disposed between the adjusting screw 81 and the spring bearing 82 in a compressed state and the ball 84 is disposed in the insertion hole 41 in the attracter 42 in a state that it abuts on the spring bearing 82. Then, the adjusting spring 83 is actuating the ball 84 so as to come into abutment on an upper end of the retaining member 7 via the spring bearing 82. In addition, the adjusting screw 81 is attached to the attracter 42 by screwing a male screw 811 on its outer periphery into a female screw 42b formed in an upper inner peripheral surface of the attracter 42.

A slight clearance is provided between the ball 84 and the insertion hole 41 in the attracter 42 and thus the ball 84 can displace in the insertion hole 41 along the axial line L. In addition, a cylindrical part 72 that is in the form of a thin cylindrical shape is formed on the ball 84 side end of the retaining member 7 and this cylindrical part 72 is brought into spherical contact with the ball 84. Thereby, an upper end of the retaining member 7 (and the valve rod 2) is always positioned on the axial line L.

A magnetic circuit is formed by electric conduction to the electromagnetic coil 43 of the electromagnetic drive part 4 and a magnetic attraction force is generated between the attractor 42 and the plunger 5. This attraction force becomes the one corresponding to an electric current to be conducted to the electromagnetic coil 43.

The electromagnetic control valve of the embodiment works as follows by the foregoing configuration. The setting adjustment part 8 actuates the valve rod 2 to the valve seat part 14 side by the adjusting spring 83 via the spring bearing 82, the ball 84 and the retaining member 7. The plunger 5 is attracted to the attractor 42 by exciting the electromagnetic coil 43, the valve rod 2 displaces in a direction separated from the valve seat member 14 against an actuating force of the adjusting spring 83 to shift from valve closing to valve opening and the opening of the valve port 13 is controlled in accordance with a positional relationship between the valve body 21 and the valve seat member 14 in a direction along the axial line L. Incidentally, the one that the plunger 5 is at the uppermost end position and the valve opening turns to be fully open is the position that the flange-like part 71 of the retaining member 7 has abutted on the counter-face surface 4a of the attractor 42. The flange-like part 71 plays the part of a stopper in this way and, thereby, prevents the plunger 5 from being sucked (tightly adhered) to the attractor 42.

In addition, the valve body 21 sits on the valve seat member 14 and shifts to valve closing by eliminating excitation of the magnetic coil 43. Incidentally, the actuating force that the adjusting spring 83 applies to the valve rod 2 is adjusted by a run-on amount of the adjusting screw 81 and an electromagnetic force (the attraction force) required for valve opening can be adjusted. The valve rod 2 displaces in the direction along the axial line L in accordance with an equilibrium relationship between the electromagnetic force that the electromagnetic coil 43 generates and the spring force of the adjusting spring 83 in this way and the opening of the valve port 13 is changed by the valve body 21.

In addition, the differential pressure between the pressure of the primary chamber 11 and the pressure of the secondary chamber 12 acts on the valve body 21 as described above and the force is applied in a valve closing direction. On the other hand, since the mean pressure chamber 15 is communicated with the primary chamber 11 via the mean pressure guide path 16, the differential pressure between the primary chamber side pressure that acts on the mean pressure chamber 15 and the secondary chamber side pressure that acts on the low pressure chamber 17b acts on the diaphragm 3 and the force in a valve opening direction is applied to the piston section 23 of the valve rod 2. Then, since the inner diameter (the effective pressure receiving diameter of the valve body 21) of the valve port 13 and the effective pressure receiving diameter of the diaphragm 3 when valve closing that the valve body 21 has sat on the valve seat member 14 are equal to each other, the forces by the differential pressure mutually cancel out for the valve rod 2 and when the valve body 21 is separated from the valve seat member 14, it is not affected by the differential pressure.

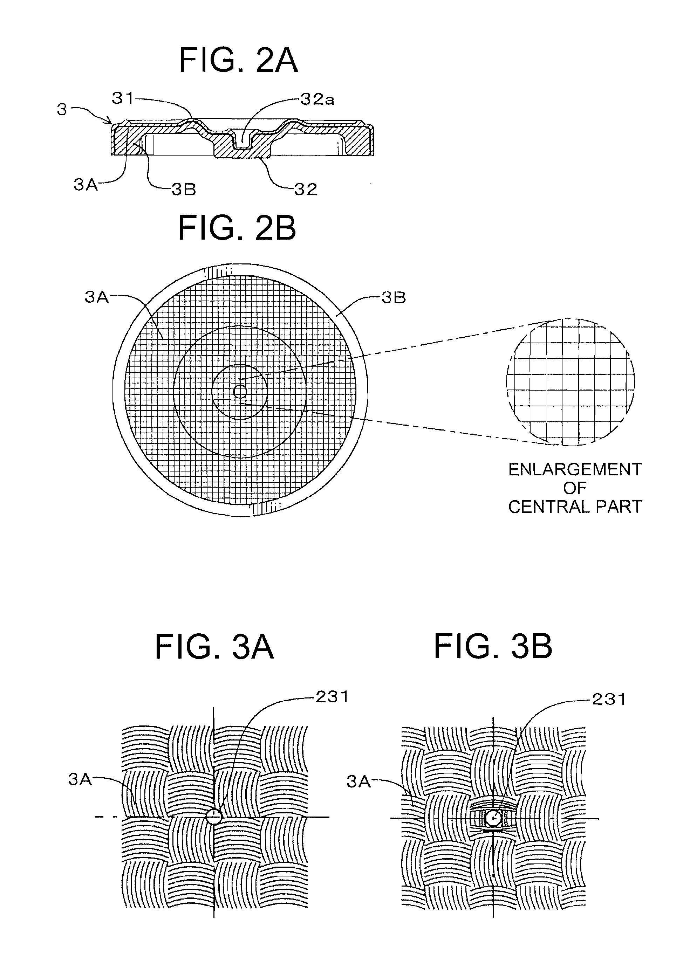

Figs. 2A and 2B are each a sectional diagram and a schematic plan view before the diaphragm 3 is fixed to the valve rod 2. This diaphragm 3 is of the type that the base fabric 3A has been embedded in the rubber layer 3B and a through hole as in the prior art is not formed in the center. Incidentally, although Fig. 2B schematically shows yarns of the base fabric 3 with lines, the base fabric 3 is flat-knitted as shown in Fig. 3A and 3B and fibers (the yarns) are densely knitted.

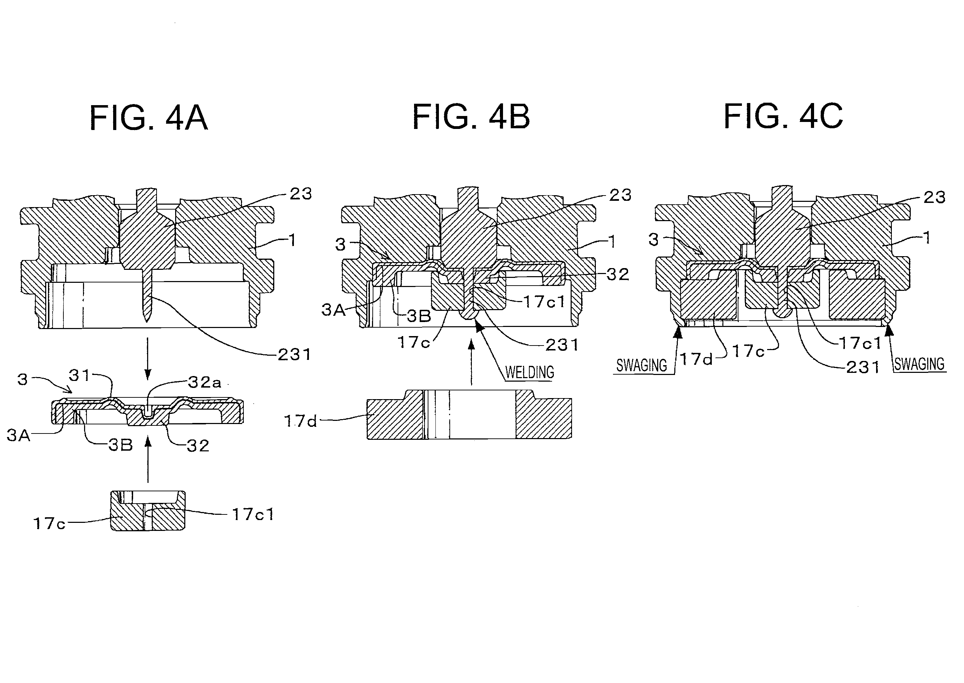

Figs. 4A to 4C are diagrams explaining an assembling process of an essential part of the electromagnetic control valve of the first embodiment and fixing of the diaphragm 3 and the valve rod 2 is performed as follows. As shown in Fig. 4A, the center of the diaphragm 3 is stuck on the needle-shaped projection 231 formed on the lower end of the piston section 23 to make the needle-shaped projection 231 pass through the diaphragm 3. In addition, the diaphragm guide 17c is inserted into the needle-shaped projection 231 through its insertion hole 17c1. Then, the needle-shaped projection 231 and the diaphragm guide 17c are firmly fixed together by spot-welding the leading end of the needle-shaped projection 231 to nip and hold the diaphragm 3 together with the piston section 23 (the valve rod 2). In addition, the diaphragm presser 17d is fitted into the lower end part of the valve housing 1 and the diaphragm presser 17d and the diaphragm 3 are fixed together by swaging the lower end of the valve housing 1 as in Fig. 4C.

Since the diaphragm 3 is held by sticking the diaphragm 3 on the needle-shaped projection 231 in this way, the base fabric 3A of the diaphragm 3 is not cut. For example, even in a case where the needle-shaped projection 231 has stuck into between the yarns of the base fabric 3A as shown in Fig. 3A, and even in a case where the needle-shaped projection 231 has stuck to the yarn of the base fabric 3A as shown in Fig. 3B, the base fabric 3A is not cut in either case. Therefore, the pressure tightness and the durability of the diaphragm 3 are improved.

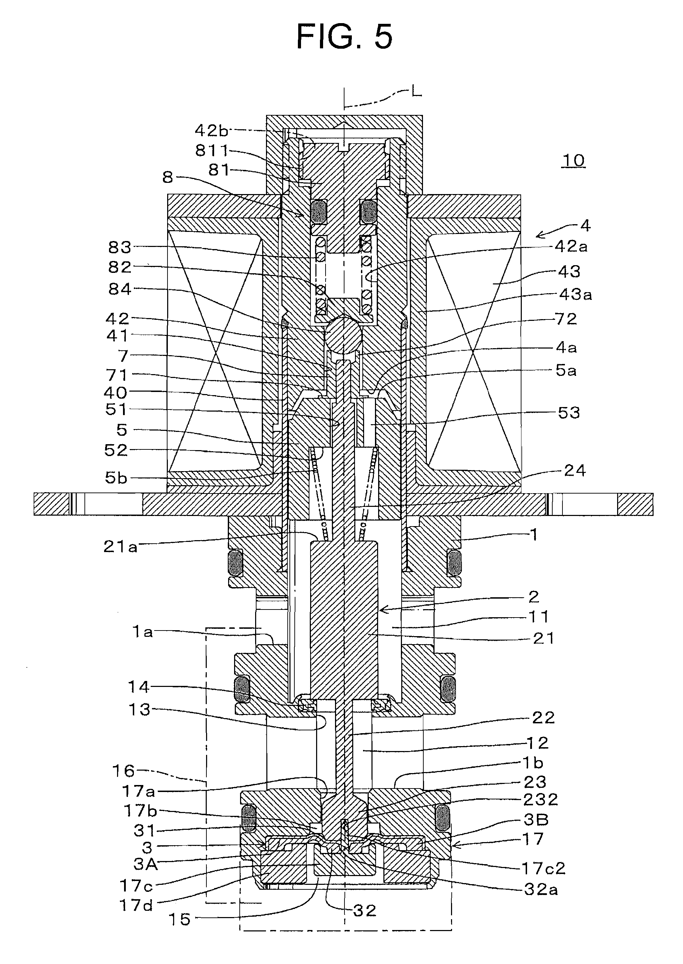

Fig. 5 is a longitudinal sectional diagram of a valve closed state of an electromagnetic control valve of a second embodiment to which the present invention has been applied and in the following respective embodiments, the same numerals as those in Fig. 1 are assigned to the same elements as those in the first embodiment and detailed description thereof is omitted. This second embodiment is of the type that a needle-shaped projection 17c2 has been formed on the diaphragm guide 17c and an insertion hole 232 into which the needle-shaped projection 17c2 is to be inserted has been formed in the piston section 23. Also in this second embodiment, the needle-shaped projection 17c2 is stuck into the center of the diaphragm 3 to make the needle-shaped projection 17c2 pass through the diaphragm 3. Then, the diaphragm 3 is nipped by press-fitting the diaphragm guide 17c (the needle-shaped projection 17c2) into the insertion hole 232 in the piston section 23 and thereby the diaphragm 3 is nipped and held by the diaphragm guide 17c together with the piston section 23 (the valve rod 2). The outer diameter of the needle-shaped projection 17c2 before assembled is made slightly larger than the inner diameter of the insertion hole 232 and the diaphragm guide 17c and the piston section 23 are firmly fixed together by press-fitting. Also in this second embodiment, that the pressure tightness and the durability of the diaphragm 3 are improved is the same as that in the first embodiment.

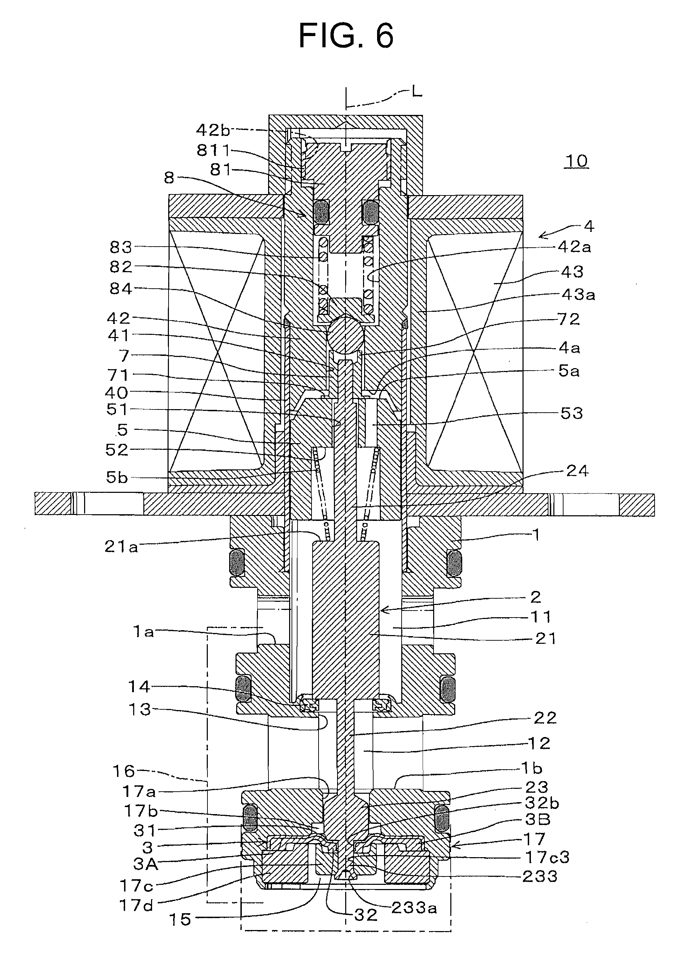

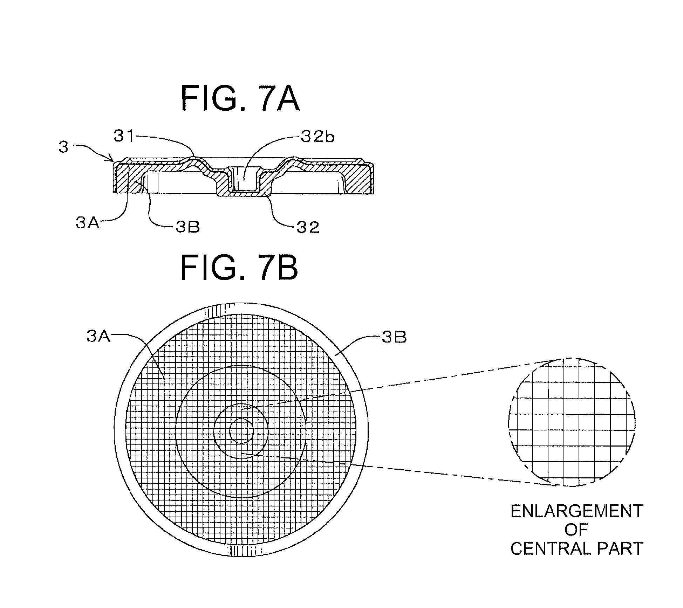

Fig. 6 is a longitudinal sectional diagram of a valve closed state of an electromagnetic control valve of a third embodiment to which the present invention has been applied. Fig. 7A and 7B are each a sectional diagram and a schematic plan view before fixing the diaphragm in the third embodiment. In the diaphragm 3 of this third embodiment, a concave part 32b that is larger in diameter than the concave part 32a in the first embodiment is formed in the boss part 32. In addition, a needle-shaped projection 233 that is larger in diameter (thicker) than the needle-shaped projection 231 in the first embodiment is formed on the lower end of the piston section 23. Further, an insertion hole 17c3 that is larger in diameter than the insertion hole 17c1 in the first embodiment is formed in the diaphragm guide 17c. Then, the needle-shaped projection (a part thereof) 233 passes through the center of the concave part 32b in the diaphragm 3 and the diaphragm guide 17c is fitted on this needle-shaped projection 233 through the insertion hole 17c3. Then, the boss part 32 of the diaphragm 3 is nipped by the diaphragm guide 17c and the piston section 23 and the diaphragm 3 is firmly fixed to the piston section by swaging the leading end of the needle-shaped projection 233.

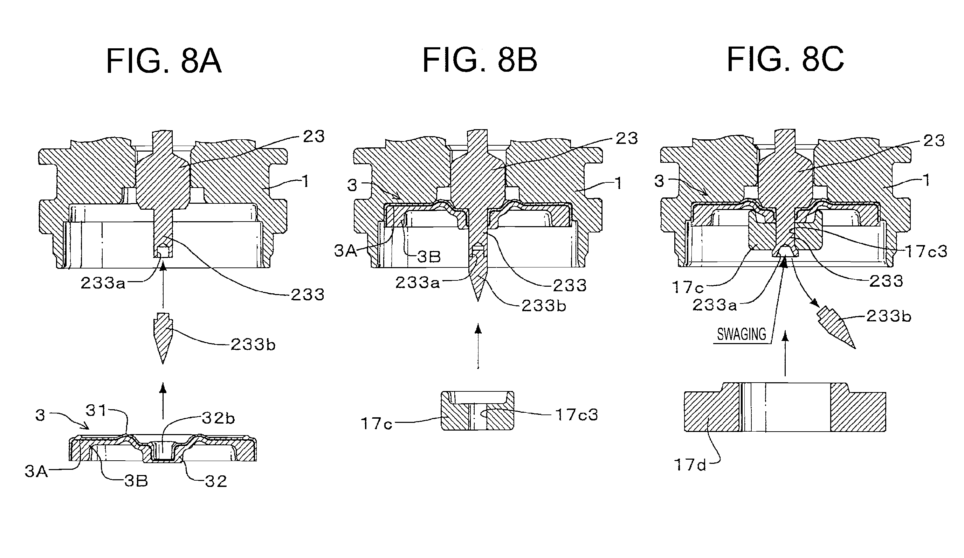

Figs. 8A to 8C are diagrams explaining an assembling process of an essential part of the electromagnetic control valve of the third embodiment and fixing of the diaphragm 3 and the valve rod 2 as the "drive shaft" is performed as follows. As shown in Fig. 8A, a needle-shaped cap 233b is fitted into a swaging hole 233a in an end of the needle-shaped projection 233 of the piston section 23 as one part of the needle-shaped projection before assembled. The center of the diaphragm 3 is stuck on this needle-shaped cap 233b and the needle-shaped projection 233 to make the needle-shaped cap 233b and the needle-shaped projection 233 pass through the diaphragm 3. As shown in Fig. 8B, the diaphragm guide 17c is inserted into the needle-shaped cap 233b and the needle-shaped projection 233 through its insertion hole 17c3. Then, as shown in Fig. 8C, the needle-shaped cap 233b is removed and the needle-shaped projection 233 and the diaphragm guide 17c are firmly fixed together by swaging a part of the swaging hole 233a in the needle-shaped projection 233 outward to nip and hold the diaphragm 3 together with the piston section 23 (the valve rod 2). In addition, the diaphragm presser 17d is fitted into the lower end part of the valve housing 1 and the diaphragm presser 17d and the diaphragm 3 are fixed together by swaging the lower end of the valve housing 1. Incidentally, they may be fixed together by welding the part of the swaging hole 233a in the needle-shaped projection 233.

Since the diaphragm 3 is held by sticking the diaphragm 3 on the needle-shaped cap 233b and the needle-shaped projection 233 in this way, the base fabric 3A of the diaphragm 3 is not cut even by the needle-shaped projection 233 that is thick in diameter. This is the same as that in the aforementioned embodiment described in Fig. 3 and the pressure tightness and the durability of the diaphragm are improved.

In addition, in this third embodiment, since the needle-shaped projection 233 is made thicker than the needle-shaped projection 231 of the first embodiment, the fixing structure for the diaphragm 3 becomes strong and high durability is obtained, for example, even in a case where it is used under a high pressure. Incidentally, since in a case where the needle-shaped cap 233a and a thick needle-shaped projection such as the needle-shaped projection 233 are to be applied, the amount that it protrudes from the insertion hole 17c3 in the diaphragm guide 17c is increased accordingly, as it stands, swaging and welding will be difficult, however, since the needle-shaped cap 233b is configured to be removable in this third embodiment, swaging and welding can be readily performed. Further, since in the third embodiment, the swaging hole 233a in the needle-shaped projection 233 is utilized for attachment of the needle-shaped cap 233b, attaching and detaching of the needle-shaped cap 233b are facilitated.

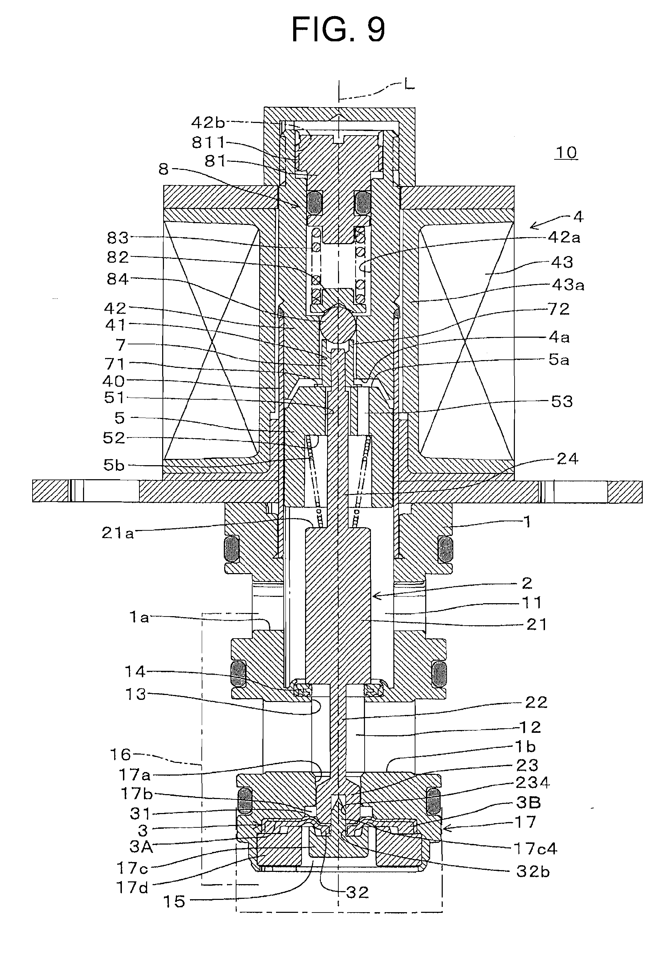

Fig. 9 is a longitudinal sectional diagram of a valve closed state of an electromagnetic control valve in a fourth embodiment to which the present invention has been applied and this fourth embodiment is of the type that a needle-shaped projection 17c4 that is larger (thicker) in diameter than the needle-shaped projection 17c2 in the second embodiment has been formed on the diaphragm guide 17c and an insertion hole 234 into which the needle-shaped projection 17c4 is to be inserted and that is larger in diameter than the insertion hole 232 in the second embodiment has been formed in the piston section 23. Also in this fourth embodiment, the needle-shaped projection 17c4 is stuck into the center of the diaphragm 3 to make the needle-shaped projection 17c4 pass through the diaphragm 3. Then, the diaphragm 3 is nipped by press-fitting the diaphragm guide 17c (the needle-shaped projection 17c4) into the insertion hole 234 in the piston section 23, thereby nipping and holding the diaphragm 3 by the diaphragm guide 17c together with the piston section 23 (the valve rod 2). The outer diameter of the needle-shaped projection 17c4 before assembled is made slightly larger than the inner diameter of the insertion hole 234 and the diaphragm guide 17c and the piston section 23 are firmly fixed together by press fitting. Also in the fourth embodiment, that the pressure tightness and the durability of the diaphragm 3 are improved is the same as that in the aforementioned embodiments.

Further, in the fourth embodiment, since the needle-shaped projection 17c4 is made thicker than the needle-shaped projection 17c2 of the second embodiment, the fixing structure for the diaphragm 3 becomes strong and the high durability is obtained, for example, even in a case where it is used under the high pressure.

Although, in the foregoing, detailed description has been made on the embodiments of the present invention with reference to the drawings, the concrete configuration is not limited to these embodiments and even when there exist design changes and so forth in a range not deviating from the gist of the present invention, they are included in the present invention. The drive shaft is not limited to the valve rod and it can be also applied to other devices and other structures as long as it is of the type of fixing the diaphragm to the drive shaft that is moved in the axial direction and the high pressure tightness and durability of the diaphragm can be obtained.

### DESCRIPTION OF REFERENCE NUMERALS

1: Valve housing
11: Primary chamber
12: Secondary chamber
13: Valve port
15: Mean pressure chamber
16: Mean pressure guide path
17: Pressure balance part
17a: Communication hole
17b: Low pressure chamber
17c: Diaphragm guide
17c1: Insertion hole
17d: Diaphragm presser
2: Valve rod (Drive shaft)
21: Valve body
22: Coupling rod
23: Piston section
231: Needle-shaped projection
3: Diaphragm
3A: Base fabric
3B: Rubber layer
17c2: Needle-shaped projection
232: Insertion hole
17c3: Insertion hole
233: Needle-shaped projection
233b: Needle-shaped cap
17c4: Needle-shaped projection
234: Insertion hole
4: Electromagnetic drive part

## Claims

1. A structure fixing diaphragm to drive shaft for fixing a flexible diaphragm with a base fabric embedded therein to a drive shaft comprising:
a diaphragm guide nipping and holding the diaphragm together with the drive shaft,
wherein a needle-shaped projection is formed on one of the drive shaft and the diaphragm guide, an insertion hole into which the needle-shaped projection is to be inserted is formed in the other,
wherein a center of the diaphragm is stuck on the needle-shaped projection so as to make the needle-shaped projection pass through the diaphragm, and
wherein the needle-shaped projection and the insertion hole are firmly fixed together to fix the diaphragm to the drive shaft.

2. The structure fixing diaphragm to drive shaft according to claim 1,
wherein the needle-shaped projection is formed on the drive shaft, the insertion hole is formed in the diaphragm guide, and wherein the needle-shaped projection is inserted into the insertion hole and a leading end of the needle-shaped projection is welded so as to firmly fix together the needle-shaped projection and the insertion hole.

3. The structure fixing diaphragm to drive shaft according to claim 1,
wherein the needle-shaped projection is formed on the diaphragm guide, the insertion hole is formed in the drive shaft, and wherein the needle-shaped projection and the insertion hole are firmly fixed together by press-fitting the needle-shaped projection into the insertion hole.

4. A method of fixing diaphragm to drive shaft for fixing a flexible diaphragm with a base fabric embedded therein to a drive shaft, the method comprising the steps of:
using a diaphragm guide nipping and holding the diaphragm together with the drive shaft;
forming a needle-shaped projection on one of the drive shaft and the diaphragm guide and forming an insertion hole into which the needle-shaped projection is to be inserted in the other; and
sticking a center of the diaphragm on the needle-shaped projection to make the needle-shaped projection pass through the diaphragm, and firmly fixing together the needle-shaped projection and the insertion hole so as to fix the diaphragm to the drive shaft.

5. The method of fixing diaphragm to drive shaft according to claim 4, wherein
the needle-shaped projection is formed on the drive shaft, a needle-shaped cap on a leading end part of the needle-shaped projection is made removable, the insertion hole is formed in the diaphragm guide, and the center of the diaphragm is stuck on the needle-shaped cap of the needle-shaped projection so as to make the needle-shaped projection pass through the diaphragm.

6. The method of fixing diaphragm to drive shaft according to claim 5, wherein
after the needle-shaped projection is made to path through the diaphragm, the needle-shaped cap of the needle-shaped projection is inserted into the insertion hole in the diaphragm guide, the needle-shaped cap is removed, and a leading end of the needle-shaped projection from which the needle-shaped cap has been removed is swaged or welded so as to firmly fix together the needle-shaped projection and the insertion hole.
